# EUROPÄISCHE PATENTSCHRIFT

(11) **EP 4 098 908 B1**
(45) Veröffentlichungstag und Bekanntmachung des Hinweises auf die Patenterteilung: **18.12.2024**
(21) Anmeldenummer: 22172213.5
(22) Anmeldetag: 09.05.2022
(51) Int. Cl.: F16H 3/093, F16H 3/097, B60K 17/28

(54) **ZAPFWELLENGETRIEBE UND LANDWIRTSCHAFTLICHES NUTZFAHRZEUG**
PTO SHAFT TRANSMISSION AND AGRICULTURAL VEHICLE
ENGRENAGE PRISE DE FORCE ET VÉHICULE UTILITAIRE AGRICOLE

(30) Priorität: 26.05.2021 DE 102021113560
(43) Veröffentlichungstag der Anmeldung: 07.12.2022
(73) Patentinhaber: Deere & Company, Moline, IL 61265 (US)
(72) Erfinder: Buhrke, Frank, Mannheim (DE)
(74) Vertreter: Stein, Stefan

(56) Entgegenhaltungen:
- EP-A1- 3 715 668
- EP-A2- 3 085 567
- WO-A1-2016/077306
- DE-A1- 102013 110 316
- JP-A- S 548 327
- US-A1- 2009 019 959

## Beschreibung

Die Erfindung betrifft ein Zapfwellengetriebe gemäss dem Oberbegriff des unabhängigen Anspruchs 1 und ein landwirtschaftliches Nutzfahrzeug gemäss dem Oberbegriff des unabhängigen Anspruchs 14.

Üblicherweise sind Leistungsabgabewellen, auch Ausgangswelle, insbesondere Zapfwelle, genannt, am vorderen und/oder hinteren Ende von landwirtschaftlichen Nutzfahrzeugen vorgesehen. Mit der Leistungsabgabewelle werden an das Nutzfahrzeug angehängte Aggregate oder Arbeitsmaschinen, die bei Feldarbeiten verwendet werden, mit Leistung versorgt. Die Aggregate oder Arbeitsmaschinen können unterschiedliche Antriebsmomente und -drehzahlen erfordern. Aus diesem Grund sind Zapfwellengetriebe bekannt, die unterschiedliche Drehzahlen bereitstellen. Die bekannten Zapfwellengetriebe können ein Umschalten der Betriebsarten der Zapfwelle im lastfreien Zustand ermöglichen.

Mit Blick auf die unterschiedlichen landwirtschaftlichen Arbeitsgeräte sind die Nenndrehzahlen der Zapfwellen heutzutage genormt. Es haben sich Nenndrehzahlen von 540 Umdrehungen pro Minute, 750 Umdrehungen pro Minute, 1000 Umdrehungen pro Minute und 1400 Umdrehungen pro Minute durchgesetzt (Standard-Übersetzungsstufe). Diese Nenndrehzahlen, auch als Gangstufen oder Übersetzungsstufen bezeichnet, liegen an der Ausgangswelle oder Zapfwelle im Bereich der Motornenndrehzahl (Höchstleistung) an. Bei niedrigeren Motordrehzahlen werden die Nenndrehzahlen der Ausgangswelle oder Zapfwelle somit nicht erreicht. Als Gangstufe oder Übersetzungsstufe wird also insbesondere die Nenndrehzahl der Ausgangswelle oder Zapfwelle bezeichnet. Wenn z.B. antriebswellenseitig eine Drehzahl von 2300 U/min (Motorennenndrehzahl) anliegt, besagt die Übersetzungsstufe 540, dass eine Drehzahl von 540 U/min an der Ausgangswelle oder Zapfwelle anliegen. Eine Übersetzungsstufe von 1000 bezeichnet eine Drehzahl von 1000 U/min. Für landwirtschaftliche Geräte mit geringer Leistungsaufnahme ist das Betreiben der Ausgangswelle oder Zapfwelle bei Motornenndrehzahl nicht erforderlich. Hierfür haben sich seit einiger Zeit auch Zapfwellengetriebe mit so genannten Economy-Übersetzungsstufen durchgesetzt. Bei den Economy-Übersetzungsstufen 540E und 1000E z. B. liegen Nenndrehzahlen von 540 bzw. 1000 Umdrehungen pro Minute schon bei reduzierter Motorendrehzahl, meist in der Nähe des höchsten Motorendrehmoments, bei ca. 1400 bis 1600 Umdrehungen pro Minute an. Damit ist es möglich, Geräte mit geringer Leistungsaufnahme Kraftstoff sparend zu betreiben. Dies ermöglicht die Einsparung von Kraftstoff bzw. Antriebsenergie. Die DE 10 2011 084 623 A1 und DE 10 2016 220 130 A1 offenbaren Zapfwellengetriebe mit lastfrei schaltbarem Zapfwellengetrieben. Nachteilig hierbei ist, dass bekannte Zapfwellengetriebe einen konstruktiv zu aufwändigen Aufbau aufweisen, also beispielsweise zu viele Zahnräder und Schaltelemente umfassen, und/oder zu viel Bauraum benötigen. Die EP 3 715 668 A1 offenbart ein Kraftübertragungsgetriebe bei welchem jede Kupplung an einer Vorgelegewelle angeordnet ist.

Der vorliegenden Erfindung liegt die Aufgabe zugrunde, ein Zapfwellengetriebe und ein Nutzfahrzeug vorzuschlagen, durch welche die vorgenannten Probleme überwunden werden. Insbesondere sollen ein Zapfwellengetriebe und ein Nutzfahrzeug vorgeschlagen werden, welche konstruktiv weniger aufwändig sind und/oder das Zapfwellengetriebe eine kompaktere Bauweise aufweist.

Diese Aufgabe wird durch ein Zapfwellengetriebe mit den Merkmalen des Anspruchs 1 und ein landwirtschaftliches Nutzfahrzeug mit den Merkmalen des Anspruchs 14 gelöst. Die abhängigen Ansprüche beziehen sich auf besonders vorteilhafte Ausführungsformen der Erfindung.

Erfindungsgemäß wird ein Zapfwellengetriebe für ein landwirtschaftliches Nutzfahrzeug vorgeschlagen. Das Zapfwellengetriebe umfasst eine Eingangswelle, eine Ausgangswelle, eine erste und eine zweite Zwischenwelle, und eine erste Zahnradstufe. Die Zahnradstufe ist derart angeordnet, und insbesondere ausgebildet, dass die Eingangswelle ein erstes Festrad und die erste Zwischenwelle ein zweites Festrad und die zweite Zwischenwelle ein drittes Festrad aufweisen, wobei nur das erste Festrad mit dem zweiten Festrad und das erste Festrad mit dem dritten Festrad in Eingriff steht. Es kämmen also nur das erste und das zweite Festrad und das erste und das dritte Festrad miteinander. Die Eingangswelle ist als Hohlwelle ausgebildet und die Ausgangswelle ist zumindest teilweise in der Eingangswelle angeordnet.

Im Speziellen können das zweite Festrad und das dritte Festrad identisch sein. Dadurch kann der Abstand zwischen der Ausgangswelle und der ersten Zwischenwelle sowie der Abstand zwischen der Ausgangswelle und der zweiten Zwischenwelle identisch, insbesondere beträgsmässig gleich gross sein. Ein Festrad kann dabei ein Zahnrad sein, dass auf der dem Zahnrad zugeordneten Welle drehfest angeordnet ist. Ein Losrad kann hingegen ein Zahnrad sein, das auf der dem Zahnrad zugeordneten Welle drehbar gelagert ist. Die Schaltelemente der vorliegenden Erfindung ermöglichen es, die Zahnräder drehfest mit einer Welle zu verbinden oder diese im Freilauf zu betreiben. Somit sind die Los- und/oder Festräder mit einem Schaltelement schaltbar. Aufgrund der Schaltbarkeit der Zahnräder, also der Los- und/oder Festräder, der vorliegenden Erfindung kann eine angepasste Schaltstrategie realisiert werden, wobei durch die schaltbaren Zahnräder die Zahnräder wahlweise einen Freilauf aufweisen können oder mit der jeweiligen zugeordneten Welle oder einer anderen Welle verbunden werden können. In neutraler Stellung können die Zahnräder beispielsweise freilaufen und keine Leistung übertragen. Ausserdem kann zwischen den Wellen durch die schaltbaren Zahnräder eine Verbindung hergestellt werden.

Die Eingangswelle und die Ausgangswelle sind zueinander koaxial angeordnet. Ebenso können die Eingangswelle und/oder die Ausgangswelle und/oder die erste und/oder zweite Zwischenwelle parallel zueinander angeordnet sein. Ausserdem kann die Ausgangswelle achsversetzt zur ersten und zweiten Zwischenwelle angeordnet sein.

Darüber hinaus können die Schaltelemente, insbesondere ein erstes Schaltelement und/oder ein zweites Schaltelement und/oder ein drittes Schaltelement, eine Neutralstellung aufweisen. Ebenso können das erste Schaltelement und/oder das zweite Schaltelement und/oder das dritte Schaltelement unter Last schaltbar oder lastfrei schaltbar ausgeführt sein. Ein Schaltelement kann in an sich bekannter Form als Klauenkupplungen oder als Stellvorrichtungen, insbesondere Schiebemuffen, und Synchronringe umfassende Schaltpakete bzw. Synchronisierungen ausgebildet sein. Die Schaltelemente können mechanisch über entsprechende Hebel oder mittels eines Aktuators (hydraulisch, pneumatisch oder elektro-mechanisch) betätigbar oder schaltbar sein. Das Betätigen kann manuell oder automatisch erfolgen. In jedem Fall kann es sich bei einem Schaltelement um ein drehfest und auf der dem Schaltelement zugeordneten Welle axial verschieblich angeordnetes Koppelmittel handeln, mit denen die Los- und/oder Festräder zur Zuschaltung einer Übersetzung drehfest mit der dem Schaltelement zugeordneten Welle verbindbar sind. Die Axialverschiebung der Koppelelemente kann über das Stellelement erfolgen. Dazu kann das Zapfwellengetriebe entsprechende Stellelement umfassen oder insbesondere jedes Schaltelement kann jeweils ein Stellelement umfassen. Die Schaltpakete bzw. Synchronisierungen können auf der zugeordneten Welle axial verschiebbare, aber mit der Welle drehfest verbundene Stellvorrichtungen bzw. Schiebemuffe und axial direkt benachbarte, also rechts und/oder links der Stellvorrichtung oder Schiebemuffe, angeordnete Synchronringe umfassen. Die Stellvorrichtung oder Schiebemuffe oder das Stellelement können zur Betätigung der Schaltelemente manuell oder hilfskraftunterstützt betätigbar sein. Dazu kann das Zapfwellengetriebe beispielsweise einen Aktuator umfassen, insbesondere eine Kolben-Zylinder-Anordnung, sodass die Stellvorrichtung oder Stellelement hilfskraftunterstützt betätigbar sind. Der Aktuator, insbesondere die Kolben-Zylinder-Anordnungen, können durch ein hydraulisches oder pneumatisches Druckmittel betreibbar sein. Das Zapfwellengetriebe kann eine erste Übersetzung und/oder eine zweite Übersetzung und/oder eine dritte Übersetzung und/oder eine vierte Übersetzung aufweisen. Dabei kann für die Übersetzung betragsmässig gelten: erste Übersetzung < zweite Übersetzung < dritte Übersetzung < vierte Übersetzung.

Wesentlich für die Erfindung ist, dass das Zapfwellengetriebe mehrere Gänge oder Übersetzungsstufen, insbesondere vier Übersetzungsstufen bereitstellt, die unterschiedliche Drehzahlen und/oder unterschiedliche Leistungen für die Zapfwelle im Betrieb ermöglichen. Es wird vorteilhafterweise ein kompaktes und konstruktiv einfach ausgestaltetes Zapfwellengetriebe zur Verfügung gestellt. Darüber hinaus ist es mit dem Zapfwellengetriebe möglich, den Motor einerseits wirtschaftlich zu betreiben, andererseits aber das landwirtschaftliche Arbeitsgerät mit derjenigen Umdrehungsgeschwindigkeit anzutreiben, für welche es ausgelegt ist.

In Ausgestaltung der Erfindung weist das Zapfwellengetriebe, insbesondere die Ausgangswelle, ein erstes Schaltelement auf. Mit dem ersten oder durch das erste Schaltelement ist das erste Festrad, und/oder insbesondere die Eingangswelle, mit der Ausgangswelle verbindbar und/oder koppelbar, bevorzugt drehfest verbindbar und/oder koppelbar ist, besonders bevorzugt lösbar drehfest verbindbar und/oder koppelbar ist. Das erste Schaltelement kann der Ausgangswelle zugeordnet sein. Mit anderen Worten, das Zapfwellengetriebe, insbesondere die Ausgangswelle, kann das erste Schaltelement zur drehfesten Verbindung des ersten Festrad und/oder der Eingangswelle mit der Ausgangswelle aufweisen. Ausserdem kann mit dem ersten Schaltelement die erste Zahnradstufe schaltbar sein. Durch die Betätigung des ersten Schaltelements können also das erste Festrad und/oder die Eingangswelle drehfest mit der Ausgangswelle verbunden werden. Dazu kann das erste Schaltelement derart betätigt werden, dass es, insbesondere axial in eine erste Richtung entlang der Ausgangswelle, in eine erste Position, insbesondere in Richtung des ersten Festrads und/oder der Eingangswelle, bewegbar ist. Das erste Festrad und/oder die Eingangswelle stehen also über das erste Schaltelement mit der Ausgangswelle in Verbindung. Somit können ein Drehmoment und eine Drehzahl von der Eingangswelle auf die Ausgangswelle übertragen werden, wenn das erste Festrad und/oder die Eingangswelle über das erste Schaltelement eine drehfeste Verbindung mit der Ausgangswelle aufweist, also das erste Schaltelement betätigt ist. Mit dem ersten Schaltelement kann somit ein Leistungspfad geschaltet werden, der direkt von der Eingangswelle zur Ausgangswelle führt. Wenn das erste Festrad und/oder die Eingangswelle mit der Ausgangswelle verbunden ist, das erste Schaltelement also betätigt ist, kann mit dem ersten Schaltelement eine vierte Übersetzungsstufe mit einer Zapfwellendrehzahlen von 1000 Umdrehungen pro Minute bei einem ökonomischen Motorbetrieb herstellbar sein. Unter dem ökonomischen Motorbetrieb kann ein Motorbetrieb bei einer reduzierten Motordrehzahl verstanden werden, bei der der Antriebsmotor unter Teillast oder Volllast, also Nenndrehzahl, arbeiten kann. Der vierten Übersetzungsstufe ist die Übersetzungsstufe 1000E zugeordnet.

In Ausgestaltung der Erfindung weist das Zapfwellengetriebe, insbesondere die erste Zwischenwelle, ein zweites Schaltelement auf. Mit dem zweiten Schaltelement oder durch das zweite Schaltelement ist die erste Zwischenwelle mit der Ausgangswelle verbindbar und/oder koppelbar, bevorzugt drehfest verbindbar und/oder koppelbar ist, besonders bevorzugt lösbar drehfest verbindbar und/oder koppelbar ist. Das zweite Schaltelement kann der ersten Zwischenwelle zugeordnet sein. Mit anderen Worten, das Zapfwellengetriebe, insbesondere die erste Zwischenwelle, kann das zweite Schaltelement zur drehfesten Verbindung eines Losrads mit der ersten Zwischenwelle aufweisen. Mit dem zweiten Schaltelement können ein oder zwei Leistungspfade geschaltet werden. Ein Leistungspfad kann einer zweiten Übersetzungsstufe entsprechen, und führt insbesondere von der Eingangswelle zur ersten Zwischenwelle und dann zur Ausgangswelle. Wenn das zweite Schaltelement betätigt ist, sich insbesondere also in einer ersten Position befindet, kann mit dem zweiten Schaltelement die zweite Übersetzungsstufe mit einer Zapfwellendrehzahlen von 540 Umdrehungen pro Minute bei ökonomischem Motorbetrieb herstellbar sein. Der zweiten Übersetzungsstufe ist die Übersetzungsstufe 540E zugeordnet. Ein anderer Leistungspfad kann einer dritten Übersetzungsstufe entsprechen, der insbesondere ebenfalls von der Eingangswelle zur ersten Zwischenwelle und das zur Ausgangswelle führt. Wenn das zweite Schaltelement betätigt ist, sich insbesondere also in einer zweiten Position befindet, kann mit dem zweiten Schaltelement die dritte Übersetzungsstufe mit einer Zapfwellendrehzahlen von 1000 Umdrehungen pro Minute bei Nenndrehzahl des Antriebsmotors herstellbar sein. Der dritten Übersetzungsstufe ist die Übersetzungsstufe 1000 zugeordnet. Vorteilhafterweise können so mehrere Übersetzungsstufen, insbesondere drei Übersetzungsstufen mit einer konstruktiv einfachen Ausgestaltung des Zapfwellengetriebes realisiert werden. Ausserdem kann dadurch der Bauraum des Zapfwellengetriebes minimiert werden.

In Ausgestaltung der Erfindung weist das Zapfwellengetriebe, insbesondere die zweite Zwischenwelle, ein drittes Schaltelement auf. Mit dem dritten Schaltelement oder durch das dritte Schaltelement ist die zweite Zwischenwelle mit der Ausgangswelle verbindbar und/oder koppelbar, bevorzugt drehfest verbindbar und/oder koppelbar ist, besonders bevorzugt lösbar drehfest verbindbar und/oder koppelbar ist. Das dritte Schaltelement kann der zweiten Zwischenwelle zugeordnet sein. Mit anderen Worten, das Zapfwellengetriebe, insbesondere die zweite Zwischenwelle, kann das dritte Schaltelement zur drehfesten Verbindung eines Losrads mit der zweiten Zwischenwelle aufweisen. Mit dem dritten Schaltelement kann ein weiterer Leistungspfad geschaltet werden. Der Leistungspfad kann einer ersten Übersetzungsstufe entsprechen, und führt insbesondere von der Eingangswelle zur zweiten Zwischenwelle und dann zur Ausgangswelle. Wenn das dritte Schaltelement betätigt ist, sich insbesondere also in einer ersten Position befindet, kann mit dem dritten Schaltelement die erste Übersetzungsstufe mit einer Zapfwellendrehzahlen von 540 Umdrehungen pro Minute bei Nenndrehzahl des Antriebsmotors herstellbar sein. Der ersten Übersetzungsstufe ist die Übersetzungsstufe 540 zugeordnet. Vorteilhafterweise können so mehrere Übersetzungsstufen, insbesondere insgesamt vier Übersetzungsstufen mit einer konstruktiv einfachen Ausgestaltung des Zapfwellengetriebes realisiert werden. Ausserdem kann dadurch der Bauraum des Zapfwellengetriebes minimiert werden.

In Ausgestaltung der Erfindung umfasst das Zapfwellengetriebe ein erstes Zahnradpaar mit zwei Zahnrädern. Das erste Zahnradpaar kann mit der ersten Zwischenwelle oder Ausgangswelle koppelbar sein. Das erste Zahnradpaar ist derart angeordnet, und/oder insbesondere ausgebildet, dass die erste Zwischenwelle und die Ausgangswelle je ein Zahnrad aufweisen. Die Zahnräder des ersten Zahnradpaars stehen, insbesondere zwischen der Ausgangswelle und der ersten Zwischenwelle, im Eingriff, bevorzugt kämmen die Zahnräder des ersten Zahnradpaars permanent miteinander. Das erste Zahnradpaar kann ein erstes Losrad auf der ersten Zwischenwelle, insbesondere ein auf der ersten Zwischenwelle drehbar gelagertes und mit der ersten Zwischenwelle koppelbares erstes Losrad, und ein viertes Festrad auf der Ausgangswelle umfassen, insbesondere ein auf der Ausgangswelle drehfest angeordnetes viertes Festrad. Die erste Zwischenwelle ist mit dem zweiten Schaltelement oder durch das zweite Schaltelement, bevorzugt über das erste Zahnradpaar, besonders bevorzugt über das erste Losrad und das vierte Festrad, mit der Ausgangswelle verbindbar. Das erste Zahnradpaar, insbesondere das erste Losrad auf der ersten Zwischenwelle, kann mit dem zweiten Schaltelement schaltbar sein. Das erste Losrad kann mit dem zweiten oder durch das zweite Schaltelement mit der ersten Zwischenwelle verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe, insbesondere die ersten Zwischenwelle, kann das zweite Schaltelement zur drehfesten Verbindung des ersten Losrads mit der Ausgangswelle aufweisen. Durch die Betätigung des zweiten Schaltelements kann also das erste Losrad drehfest mit der Ausgangswelle verbunden werden. Dazu kann das zweite Schaltelement derart betätigt werden, dass es, insbesondere axial in eine erste Richtung entlang der ersten Zwischenwelle, in eine erste Position bewegbar ist. Das erste Losrad ist also auf der ersten Zwischenwelle vorgesehen und steht über das zweite Schaltelement mit der ersten Zwischenwelle in Verbindung. Dadurch kann ein Drehmoment und eine Drehzahl von der Eingangswelle über das erste Festrad zum zweiten Festrad zur ersten Zwischenwelle und dann über das erste Losrad zum vierten Festrad auf die Ausgangswelle übertragen werden, insbesondere wenn das erste Losrad über das zweite Schaltelement eine drehfeste Verbindung mit der ersten Zwischenwelle aufweist, bevorzugt also, wenn das zweite Schaltelement betätigt ist, sich besonders bevorzugt also in einer ersten Position befindet. Somit kann, insbesondere wenn das erste Losrad mit der ersten Zwischenwelle verbunden ist, das zweite Schaltelement also betätigt ist, mit dem zweiten Schaltelement die zweite Übersetzungsstufe herstellbar sein.

In Ausgestaltung der Erfindung umfasst das erste Zahnradpaar ein viertes Festrad auf der ersten Zwischenwelle, insbesondere ein auf der ersten Zwischenwelle drehfest angeordnetes viertes Festrad umfasst, und ein erstes Losrad auf der Ausgangswelle, insbesondere ein auf der Ausgangswelle drehbar gelagertes und mit der Ausgangswelle koppelbares erstes Losrad. Die erste Zwischenwelle ist mit dem ersten Schaltelement oder durch das erste Schaltelement, bevorzugt über das erste Zahnradpaar, besonders bevorzugt über das erste Losrad und das vierte Festrad, mit der Ausgangswelle verbindbar. Das erste Zahnradpaar kann, insbesondere das erste Losrad auf der Ausgangswelle, mit dem ersten Schaltelement schaltbar sein. Das erste Losrad auf der Ausgangswelle kann mit dem ersten oder durch das erste Schaltelement mit der Ausgangswelle verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe, insbesondere die Ausgangswelle, kann das erste Schaltelement zur drehfesten Verbindung des ersten Losrads oder des ersten Festrads und/oder der Eingangswelle mit der Ausgangswelle aufweisen. Durch die Betätigung des ersten Schaltelements kann also das erste Losrad drehfest mit der Ausgangswelle verbunden werden. Dazu kann das erste Schaltelement derart betätigt werden, dass es, insbesondere axial in eine zur ersten Richtung entgegengesetzte zweite Richtung entlang der Ausgangswelle, in eine zweite Position bewegbar ist. Das erste Losrad ist also auf der Ausgangswelle vorgesehen und steht über das erste Schaltelement mit der Ausgangswelle in Verbindung. Dadurch kann ein Drehmoment und eine Drehzahl von der Eingangswelle über das erste Festrad zum zweiten Festrad zur ersten Zwischenwelle und von der ersten Zwischenwelle über das vierte Festrad und das erste Losrad auf die Ausgangswelle übertragen werden, insbesondere wenn das erste Losrad über das erste Schaltelement eine drehfeste Verbindung mit der Ausgangswelle aufweist, bevorzugt also, wenn das erste Schaltelement betätigt ist, sich besonders bevorzugt also in der zweiten Position befindet. Somit kann, insbesondere wenn das erste Losrad mit der Ausgangswelle verbunden ist, das erste Schaltelement also betätigt ist, mit dem ersten Schaltelement die dritte Übersetzungsstufe mit einer Zapfwellendrehzahlen von 1000 Umdrehungen pro Minute bei Nenndrehzahl des Antriebsmotors herstellbar sein.

Als vorteilhafte Massnahme umfasst das Zapfwellengetriebe eine zweite Zahnradstufe, die derart angeordnet, und insbesondere ausgebildet ist, dass die Ausgangswelle ein fünftes Festrad und die erste Zwischenwelle ein zweites Losrad und die zweite Zwischenwelle ein drittes Losrad aufweisen, wobei nur das fünfte Festrad mit dem zweiten Losrad und das fünfte Festrad mit dem dritten Losrad in Eingriff stehen, bevorzugt permanent miteinander kämmen. Die zweite Zahnradstufe kann wie folgt schaltbar sein. Die erste Zwischenwelle ist mit dem zweiten Schaltelement oder durch das zweite Schaltelement, bevorzugt über die erste Zahnradstufe, besonders bevorzugt über das zweite Losrad und das fünfte Festrad, mit der Ausgangswelle verbindbar. Die zweite Zahnradstufe, insbesondere das zweite Losrad auf der ersten Zwischenwelle, kann mit dem zweiten Schaltelement schaltbar sein. Das zweite Losrad kann mit dem zweiten oder durch das zweite Schaltelement mit der ersten Zwischenwelle verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe, insbesondere die ersten Zwischenwelle, kann das zweite Schaltelement zur drehfesten Verbindung des zweiten Losrads mit der ersten Zwischenwelle aufweisen. Durch die Betätigung des zweiten Schaltelements kann also das zweite Losrad drehfest mit der ersten Zwischenwelle verbunden werden. Dazu kann das zweite Schaltelement derart betätigt werden, dass es, insbesondere axial in eine erste Richtung entlang der ersten Zwischenwelle, in eine erste Position bewegbar ist. Ebenso oder zusätzlich kann das zweite Schaltelement derart betätigt werden, dass es, insbesondere axial in eine zur ersten Richtung entgegengesetzte zweite Richtung entlang der ersten Zwischenwelle, in eine zweite Position bewegbar ist. Das zweite Losrad ist also auf der ersten Zwischenwelle vorgesehen und steht über das zweite Schaltelement mit der ersten Zwischenwelle in Verbindung. Es kann ein Drehmoment und eine Drehzahl von der Eingangswelle über das erste Festrad zum zweiten Festrad zur ersten Zwischenwelle und dann über das zweite Losrad zum fünften Festrad auf die Ausgangswelle übertragen werden, insbesondere wenn das zweite Losrad über das zweite Schaltelement eine drehfeste Verbindung mit der ersten Zwischenwelle aufweist, bevorzugt also, wenn das zweite Schaltelement betätigt ist, sich besonders bevorzugt also in einer ersten Position befindet. Somit kann, insbesondere wenn das zweite Losrad mit der ersten Zwischenwelle verbunden ist, das zweite Schaltelement also betätigt ist, mit dem zweiten Schaltelement die zweite Übersetzungsstufe herstellbar sein. Ebenso oder zusätzlich kann ein Drehmoment und eine Drehzahl von der Eingangswelle über das erste Festrad zum zweiten Festrad zur ersten Zwischenwelle und dann über das zweite Losrad zum fünften Festrad auf die Ausgangswelle übertragen werden, insbesondere wenn das zweite Losrad über das zweite Schaltelement eine drehfeste Verbindung mit der ersten Zwischenwelle aufweist, bevorzugt also, wenn das zweite Schaltelement betätigt ist, sich besonders bevorzugt also in einer zweiten Position befindet. Somit kann, insbesondere wenn das zweite Losrad mit der ersten Zwischenwelle verbunden ist, das zweite Schaltelement also betätigt ist, mit dem zweiten Schaltelement die dritte Übersetzungsstufe herstellbar sein. Die zweite Zwischenwelle ist mit dem dritten Schaltelement oder durch das dritte Schaltelement, bevorzugt über die zweite Zahnradstufe, besonders bevorzugt über das dritte Losrad und das fünfte Festrad, mit der Ausgangswelle verbindbar. Die zweite Zahnradstufe, insbesondere das dritte Losrad auf der zweiten Zwischenwelle, kann mit dem dritten Schaltelement schaltbar sein. Das dritte Losrad kann mit dem dritten oder durch das dritte Schaltelement mit der zweiten Zwischenwelle verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe, insbesondere die zweite Zwischenwelle, kann das dritte Schaltelement zur drehfesten Verbindung des dritten Losrads mit der zweiten Zwischenwelle aufweisen. Durch die Betätigung des dritten Schaltelements kann also das dritte Losrad drehfest mit der zweiten Zwischenwelle verbunden werden. Dazu kann das dritte Schaltelement derart betätigt werden, dass es, insbesondere axial in eine erste Richtung entlang der zweiten Zwischenwelle, in eine erste Position bewegbar ist. Das dritte Losrad ist also auf der zweiten Zwischenwelle vorgesehen und steht über das dritte Schaltelement mit der zweiten Zwischenwelle in Verbindung. Dadurch kann ein Drehmoment und eine Drehzahl von der Eingangswelle über das erste Festrad zum dritten Festrad zur zweiten Zwischenwelle und dann über das dritte Losrad zum fünften Festrad auf die Ausgangswelle übertragen werden, insbesondere wenn das dritte Losrad über das dritte Schaltelement eine drehfeste Verbindung mit der zweiten Zwischenwelle aufweist, bevorzugt also, wenn das dritte Schaltelement betätigt ist, sich besonders bevorzugt also in einer ersten Position befindet. Somit kann, insbesondere wenn das dritte Losrad mit der zweiten Zwischenwelle verbunden ist, das dritte Schaltelement also betätigt ist, mit dem dritte Schaltelement die erste Übersetzungsstufe herstellbar sein.

In Ausgestaltung der Erfindung umfasst das Zapfwellengetriebe ein zweites Zahnradpaar mit zwei Zahnrädern. Das zweite Zahnradpaar kann mit der ersten Zwischenwelle oder Ausgangswelle koppelbar sein. Das zweite Zahnradpaar ist derart angeordnet, und/oder insbesondere ausgebildet, dass die erste Zwischenwelle und die Ausgangswelle je ein Zahnrad aufweisen. Die Zahnräder des zweiten Zahnradpaars stehen, insbesondere zwischen der Ausgangswelle und der ersten Zwischenwelle, im Eingriff, bevorzugt kämmen die Zahnräder des zweiten Zahnradpaars permanent miteinander. Das zweite Zahnradpaar kann ein zweites Losrad auf der ersten Zwischenwelle, insbesondere ein auf der ersten Zwischenwelle drehbar gelagertes und mit der ersten Zwischenwelle koppelbares zweites Losrad umfassen, und ein fünftes Festrad auf der Ausgangswelle, insbesondere ein auf der Ausgangswelle drehfest angeordnetes fünftes Festrad umfassen. Die erste Zwischenwelle ist mit dem zweiten Schaltelement oder durch das zweite Schaltelement, bevorzugt über das zweite Zahnradpaar, besonders bevorzugt über das zweite Losrad und das fünfte Festrad, mit der Ausgangswelle verbindbar. Die zweite Zahnradstufe, insbesondere das zweite Losrad auf der ersten Zwischenwelle, kann mit dem zweiten Schaltelement schaltbar sein. Das zweite Losrad kann mit dem zweiten oder durch das zweite Schaltelement mit der ersten Zwischenwelle verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe, insbesondere die ersten Zwischenwelle, kann das zweite Schaltelement zur drehfesten Verbindung des zweiten Losrads mit der ersten Zwischenwelle aufweisen. Durch die Betätigung des zweiten Schaltelements kann also das zweite Losrad drehfest mit der ersten Zwischenwelle verbunden werden. Dazu kann das zweite Schaltelement derart betätigt werden, dass es, insbesondere axial in eine erste Richtung entlang der ersten Zwischenwelle, in eine erste Position bewegbar ist. Ebenso oder zusätzlich kann das zweite Schaltelement derart betätigt werden, dass es, insbesondere axial in eine zur ersten Richtung entgegengesetzte zweite Richtung entlang der ersten Zwischenwelle, in eine zweite Position bewegbar ist. Das zweite Losrad kann also auf der ersten Zwischenwelle vorgesehen und über das zweite Schaltelement mit der ersten Zwischenwelle in Verbindung stehen. Dadurch kann ein Drehmoment und eine Drehzahl von der Eingangswelle über das erste Festrad zum zweiten Festrad zur ersten Zwischenwelle und dann über das zweite Losrad zum fünften Festrad auf die Ausgangswelle übertragen werden, insbesondere wenn das zweite Losrad über das zweite Schaltelement eine drehfeste Verbindung mit der ersten Zwischenwelle aufweist, bevorzugt also, wenn das zweite Schaltelement betätigt ist, sich besonders bevorzugt also in einer zweiten Position befindet. Somit kann, insbesondere wenn das zweite Losrad mit der ersten Zwischenwelle verbunden ist, das zweite Schaltelement also betätigt ist, mit dem zweiten Schaltelement die dritte Übersetzungsstufe herstellbar sein.

In Ausgestaltung der Erfindung umfasst das Zapfwellengetriebe ein drittes Zahnradpaar mit zwei Zahnrädern. Das dritte Zahnradpaar kann mit der zweiten Zwischenwelle oder Ausgangswelle koppelbar sein. Das dritte Zahnradpaar ist derart angeordnet, und/oder insbesondere ausgebildet, dass die zweite Zwischenwelle und die Ausgangswelle je ein Zahnrad aufweisen. Die Zahnräder des dritten Zahnradpaars stehen, insbesondere zwischen der Ausgangswelle und der zweiten Zwischenwelle, im Eingriff, bevorzugt kämmen die Zahnräder des dritten Zahnradpaars permanent miteinander. Das dritte Zahnradpaar kann ein drittes Losrad auf der zweiten Zwischenwelle, insbesondere ein auf der zweiten Zwischenwelle drehbar gelagertes und mit der zweiten Zwischenwelle koppelbares drittes Losrad umfassen, und ein sechstes Festrad auf der Ausgangswelle, insbesondere ein auf der Ausgangswelle drehfest angeordnetes sechstes Festrad umfassen. Die zweite Zwischenwelle ist mit dem dritten Schaltelement oder durch das dritte Schaltelement, bevorzugt über das dritte Zahnradpaar, besonders bevorzugt über das dritte Losrad und das sechste Festrad, mit der Ausgangswelle verbindbar. Das dritte Zahnradpaar, insbesondere das dritte Losrad auf der zweiten Zwischenwelle, kann mit dem dritten Schaltelement schaltbar sein. Das dritte Losrad kann mit dem dritten oder durch das dritte Schaltelement mit der zweiten Zwischenwelle verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe, insbesondere die zweite Zwischenwelle, kann das dritte Schaltelement zur drehfesten Verbindung des dritten Losrads mit der zweiten Zwischenwelle aufweisen. Durch die Betätigung des dritten Schaltelements kann also das dritte Losrad drehfest mit der zweiten Zwischenwelle verbunden werden. Dazu kann das dritte Schaltelement derart betätigt werden, dass es, insbesondere axial in eine erste Richtung entlang der zweiten Zwischenwelle, in eine erste Position bewegbar ist. Das dritte Losrad kann also auf der zweiten Zwischenwelle vorgesehen und über das dritte Schaltelement mit der zweiten Zwischenwelle in Verbindung stehen. Dadurch kann ein Drehmoment und eine Drehzahl von der Eingangswelle über das erste Festrad zum dritten Festrad zur zweiten Zwischenwelle und dann über das dritte Losrad zum sechsten Festrad auf die Ausgangswelle übertragen werden, insbesondere wenn das dritte Losrad über das dritte Schaltelement eine drehfeste Verbindung mit der zweiten Zwischenwelle aufweist, bevorzugt also, wenn das dritte Schaltelement betätigt ist, sich besonders bevorzugt also in einer ersten Position befindet. Somit kann, insbesondere wenn das dritte Losrad mit der ersten Zwischenwelle verbunden ist, das dritte Schaltelement also betätigt ist, mit dem dritten Schaltelement die erste Übersetzungsstufe herstellbar sein.

Die Erfindung betrifft weiter ein landwirtschaftliches Nutzfahrzeug, insbesondere ein Traktor oder Schlepper. Das landwirtschaftliche Nutzfahrzeug umfasst ein Zapfwellengetriebe, insbesondere ein Zapfwellengetriebe nach einem der Ansprüche 1 bis 13. Das Nutzfahrzeug kann ausserdem einen Antriebsmotor, beispielsweise einen Verbrennungsmotor oder einen Elektromotor umfassen. Das landwirtschaftliche Nutzfahrzeug, insbesondere der Antriebsmotor, kann eine Abtriebswelle umfassen. Eine Antriebswelle des Zapfwellengetriebes kann die Abtriebswelle des Antriebsmotors sein. Ebenso kann das Zapfwellengetriebe, insbesondere die Antriebswelle, mit der Abtriebswelle gekoppelt sein. Die Abtriebswelle kann mit einem Getriebe des Nutzfahrzeugs koppelbar sein. Im Speziellen kann das Nutzfahrzeug oder das Zapfwellengetriebe eine Kupplung umfassen. Eine Eingangsseiten der Kupplung kann mit der Abtriebswelle und eine Ausgangsseiten der Kupplung mit einem zweiten Antriebsrad verbunden sein. Das zweite Antriebsrad kann als Festrad ausgebildet sein und drehfest mit der Ausgangsseite der Kupplung verbunden sein. Ausserdem kann ein erstes Antriebsrad, das insbesondere als Festrad ausgebildet sein kann, auf der Eingangswelle angeordnet sein, und insbesondere mit der Eingangswelle drehfest verbunden sein. Die Kupplung und das erste und zweite Antriebsrad können als Teil des Zapfwellengetriebes ausgebildet sein. Ebenso kann aber auch nur das erste Antriebsrad als Teil des Zapfwellengetriebes und die Kupplung und das zweite Antriebsrad können als Teil des Nutzfahrzeugs ausgebildet sein.

Das Zapfwellengetriebe ist zum Übertragen eines von einem Antriebsmotor erzeugten Drehmoments und einer Drehzahl an ein Arbeitsgerät oder ein Aggregat vorgesehen. Das erfindungsgemässe Nutzfahrzeug weist die oben beschriebenen Vorteile des erfindungsgemässen Getriebes auf.

Mit dem erfindungsgemässen Zapfwellengetriebe und dem erfindungsgemässen Nutzfahrzeug, das das Zapfwellengetriebe umfasst, können neben den oben genannten Vorteilen, die folgenden Vorteile erreicht werden. In vorteilhafter Weise ergibt sich bei dem Zapfwellengetriebe ein guter Wirkungsgrad bezüglich der Schlepp- und Verzahnungsverluste. Von Vorteil sind also das Zapfwellengetriebe und das Nutzfahrzeug insgesamt technisch und konstruktiv und wirtschaftlich weniger aufwändig. Ebenso wird zusätzlicher Bauraum für Bauteile außerhalb des Zapfwellengetriebes ermöglicht. Ausserdem kann vorteilhafterweise die Leistung des Nutzfahrzeugs verbessert und/oder der Kraftstoffverbrauch gesenkt werden.

Im Folgenden werden die Erfindung sowie weitere Vorteile und vorteilhafte Weiterbildungen und Ausgestaltungen der Erfindung sowohl in apparativer als auch in verfahrenstechnischer Hinsicht anhand von Ausführungsbeispielen und unter Bezugnahme auf die Zeichnung näher erläutert. Dabei sind hinsichtlich ihrer Funktion übereinstimmende bzw. vergleichbare Bauteile mit denselben Bezugszeichen gekennzeichnet. In den schematischen Zeichnungen zeigen:
- Fig. 1: eine schematische Darstellung eines ersten Ausführungsbeispiels eines erfindungsgemässen landwirtschaftlichen Nutzfahrzeugs mit einem erfindungsgemässen Zapfwellengetriebe, und
- Fig. 2: eine schematische Darstellung eines ersten Ausführungsbeispiels des erfindungsgemässen Zapfwellengetriebes, und
- Fig. 3: eine schematische Darstellung eines zweiten Ausführungsbeispiels des erfindungsgemässen Zapfwellengetriebes, und
- Fig. 4: eine schematische Darstellung eines dritten Ausführungsbeispiels des erfindungsgemässen Zapfwellengetriebe, und

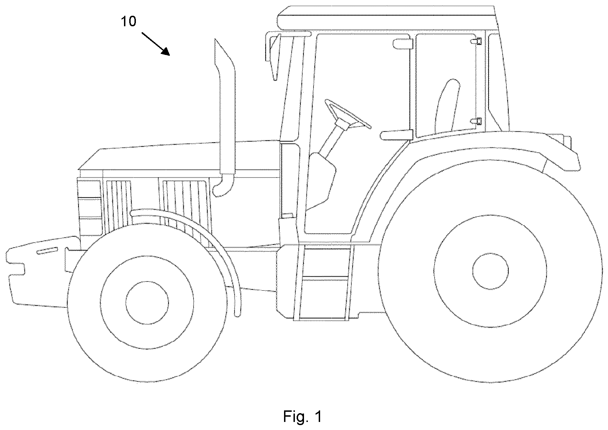

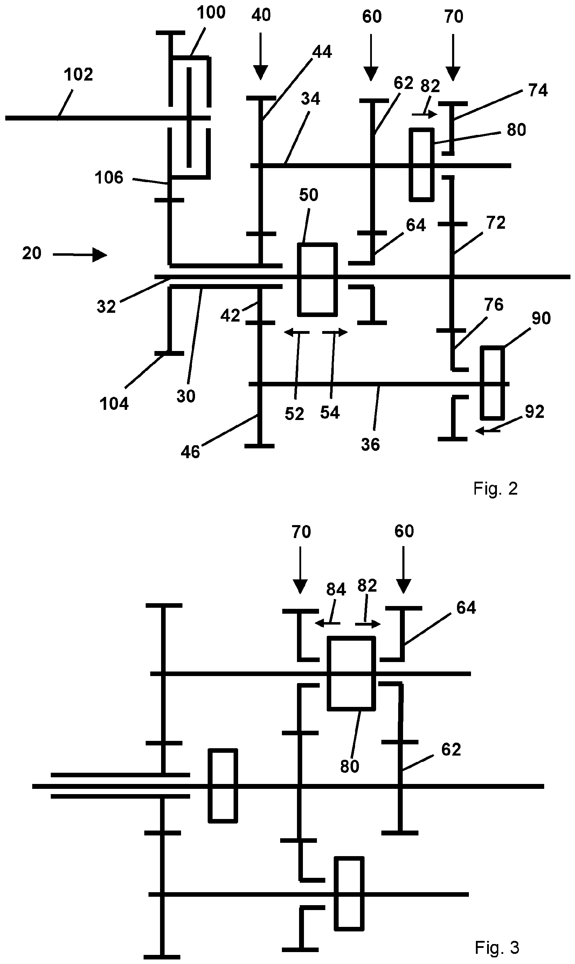

Figur 1 zeigt eine schematische Darstellung eines ersten Ausführungsbeispiels eines erfindungsgemässen landwirtschaftlichen Nutzfahrzeugs 10, insbesondere eines Traktors oder Schleppers. Das landwirtschaftlichen Nutzfahrzeug 10 kann das erfindungsgemässe Zapfwellengetriebe (siehe Figuren 2 bis 4, Bezugszeichen 20) umfassen und/oder verwenden, um eine Versorgung von Aggregaten oder Arbeitsmaschinen mit Antriebsleistung mit der Ausgangswelle oder Zapfwelle zu ermöglichen. An einem solchen Nutzfahrzeug ist die Ausgangswelle oder Zapfwelle üblicherweise vorne und/oder hinten am Fahrzeug vorgesehen. Hierfür ist das Zapfwellengetriebe notwendig, welches die Ausgangswelle oder Zapfwelle mit der Antriebsleistung versorgt und die Steuerung der Ausgangswelle oder Zapfwelle ermöglicht. Das landwirtschaftliche Nutzfahrzeug kann im Weiteren einen Antriebsmotor umfassen. Hierbei kann eine Antriebswelle des Zapfwellengetriebes eine Abtriebswelle des Antriebsmotors sein. Ebenso kann die Antriebswelle oder ein Antriebsrad aber auch mit der Abtriebswelle verbunden und/oder gekoppelt sein.

Figur 2 zeigt eine schematische Darstellung eines ersten Ausführungsbeispiels des erfindungsgemässen Zapfwellengetriebes 20. Das in Figur 2 gezeigte Zapfwellengetriebe 20 entspricht im Wesentlichen dem in Figur 1 genannten Zapfwellengetriebe, weshalb im Folgenden lediglich auf in Figur 1 nicht gezeigte Details eingegangen wird. Das Nutzfahrzeug 10 kann das Zapfwellengetriebe 20, wie in Figur 2 dargestellt, umfassen.

Das Zapfwellengetriebe 20 umfasst eine Eingangswelle 30, eine Ausgangswelle 32, eine erste Zwischenwelle 34, eine zweite Zwischenwelle 36 und eine erste Zahnradstufe. Die erste Zahnradstufe 40 ist derart angeordnet, dass die Eingangswelle 30 ein erstes Festrad 42 und die erste Zwischenwelle 34 ein zweites Festrad 44 und die zweite Zwischenwelle 36 ein drittes Festrad 46 aufweisen. Dabei stehen nur das erste Festrad 42 mit dem zweiten Festrad 44 und das erste Festrad 44 mit dem dritten Festrad 46 in Eingriff, also insbesondere permanent kämmen.

Das Zapfwellengetriebe 20, insbesondere die Ausgangswelle 32, weist ein erstes Schaltelement 50 auf. Mit dem ersten Schaltelement 50 oder durch das erste Schaltelement 50 ist das erste Festrad 42 und/oder die Eingangswelle 30 mit der Ausgangswelle 32 verbindbar und/oder koppelbar, bevorzugt drehfest verbindbar und/oder koppelbar, besonders bevorzugt lösbar drehfest verbindbar und/oder koppelbar. Durch die Betätigung des ersten Schaltelements 50 können also das erste Festrad 42 und/oder die Eingangswelle 30 drehfest mit der Ausgangswelle 32 verbunden werden. Dazu kann das erste Schaltelement 50 derart betätigt werden, dass es, insbesondere axial in eine erste Richtung entlang der Ausgangswelle 32, in eine erste Position 52 bewegbar ist. Somit können ein Drehmoment und eine Drehzahl von der Eingangswelle 30 auf die Ausgangswelle 32 übertragen werden, insbesondere wenn das erste Festrad 42 und/oder die Eingangswelle 30 über das erste Schaltelement 50 eine drehfeste Verbindung mit der Ausgangswelle 32 aufweist, also das erste Schaltelement 50 betätigt ist. Das Zapfwellengetriebe 20 umfasst weiter ein erstes Zahnradpaar 60 mit zwei Zahnrädern. Dabei ist das erste Zahnradpaar 60 derart angeordnet, dass die erste Zwischenwelle 34 und die Ausgangswelle 32 je ein Zahnrad aufweisen und die Zahnräder des ersten Zahnradpaars 60, insbesondere zwischen der Ausgangswelle 32 und der ersten Zwischenwelle 34, im Eingriff stehen, insbesondere permanent miteinander kämmen. Die Zahnräder des ersten Zahnradpaars 60 sind ein viertes Festrad 62 und ein erstes Losrad 64. Die erste Zwischenwelle 34 weist das vierte Festrad 62 und die Ausgangswelle 32 das erste Losrad 64 auf. Die erste Zwischenwelle 34 ist mit dem ersten oder durch das erste Schaltelement 50, bevorzugt über das erste Zahnradpaar 60, besonders bevorzug über das erste Losrad 64 und das vierte Festrad 62, mit der Ausgangswelle 32 verbindbar. Ausserdem kann mit dem ersten Schaltelement 50 das erste Zahnradpaar 60, insbesondere das erste Losrad 64, schaltbar sein. Das erste Losrad 64 ist mit dem ersten oder durch das erste Schaltelement 50 mit der Ausgangswelle 32 verbindbar und/oder koppelbar, bevorzugt drehfest verbindbar und/oder koppelbar, besonders bevorzugt lösbar drehfest verbindbar und/oder koppelbar. Durch die Betätigung des ersten Schaltelements 50 kann also das erste Losrad 64 drehfest mit der Ausgangswelle 32 verbunden werden. Dazu kann das erste Schaltelement 50 derart betätigt werden, dass es, insbesondere axial in eine zur ersten Richtung entgegengesetzte zweite Richtung entlang der Ausgangswelle 32, in eine zweite Position 54 bewegbar ist. Dadurch kann ein Drehmoment und eine Drehzahl von der ersten Zwischenwelle 34 über das vierte Festrad 62 und das erste Losrad 64 auf die Ausgangswelle 32 übertragen werden, insbesondere wenn das erste Losrad 64 über das erste Schaltelement 50 eine drehfeste Verbindung mit der Ausgangswelle 32 aufweist, also das erste Schaltelement 50 betätigt ist.

Das Zapfwellengetriebe 20 umfasst weiter eine zweite Zahnradstufe 70. Die zweite Zahnradstufe 70 ist derart angeordnet, dass die Ausgangswelle 32 ein fünftes Festrad 72 und die erste Zwischenwelle 34 ein zweites Losrad 74 und die zweite Zwischenwelle 36 ein drittes Losrad 76 aufweisen, wobei nur das fünfte Festrad 72 mit dem zweiten Losrad 74 und das fünfte Festrad 72 mit dem dritten Losrad 76 in Eingriff stehen. Das Zapfwellengetriebe 20, insbesondere die erste Zwischenwelle 34, weist ein zweites Schaltelement 80 auf. Die erste Zwischenwelle 34 ist mit dem zweiten oder durch das zweite Schaltelement 80, bevorzugt über die zweite Zahnradstufe 70, besonders bevorzugt über das zweite Losrad 74 und das fünfte Festrad 76, mit der Ausgangswelle 32 verbindbar. Ausserdem kann mit dem zweiten Schaltelement 80 die zweite Zahnradstufe 70, insbesondere das zweite Losrad 74, schaltbar sein. Das zweite Losrad 74 ist mit dem zweiten oder durch das zweite Schaltelement 80 mit der ersten Zwischenwelle 34 verbindbar und/oder koppelbar, bevorzugt drehfest verbindbar und/oder koppelbar, besonders bevorzugt lösbar drehfest verbindbar und/oder koppelbar. Durch die Betätigung des zweiten Schaltelements 80 kann also das zweite Losrad 74 drehfest mit der ersten Zwischenwelle 34 verbunden werden. Dazu kann das zweite Schaltelement 80 derart betätigt werden, dass es, insbesondere axial in eine erste Richtung entlang der ersten Zwischenwelle 34, in eine erste Position 82 bewegbar ist. Das zweite Losrad 74 ist also auf der ersten Zwischenwelle 34 vorgesehen und steht über das zweite Schaltelement 80 mit der ersten Zwischenwelle 34 in Verbindung. Dadurch kann ein Drehmoment und eine Drehzahl von der ersten Zwischenwelle 34 über das zweite Losrad 74 und das fünfte Festrad 72 auf die Ausgangswelle 32 übertragen werden, insbesondere wenn das zweite Losrad 74 über das zweite Schaltelement 80 eine drehfeste Verbindung mit der ersten Zwischenwelle 34 aufweist, also das zweite Schaltelement 80 betätigt ist.

Das Zapfwellengetriebe 20, insbesondere die zweite Zwischenwelle 36, weist ein drittes Schaltelement 90 auf. Die zweite Zwischenwelle 36 ist mit dem dritten oder durch das dritte Schaltelement 90, bevorzugt über die zweite Zahnradstufe 70, besonders bevorzug über das dritte Losrad 76 und das fünfte Festrad 72, mit der Ausgangswelle 32 verbindbar. Ausserdem kann mit dem dritten Schaltelement 90 die zweite Zahnradstufe 70, insbesondere das dritte Losrad 76, schaltbar sein. Das dritte Losrad 76 ist mit dem dritten oder durch das dritte Schaltelement 90 mit der zweiten Zwischenwelle 36 verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe 20, insbesondere die zweite Zwischenwelle 36, kann das dritte Schaltelement 90 zur drehfesten Verbindung des dritten Losrads 76 mit der zweiten Zwischenwelle 36 aufweisen. Durch die Betätigung des dritten Schaltelements 90 kann also das dritte Losrad 76 drehfest mit der zweiten Zwischenwelle 36 verbunden werden. Dazu kann das dritte Schaltelement 90 derart betätigt werden, dass es, insbesondere axial in eine erste Richtung entlang der zweiten Zwischenwelle 36, in eine erste Position 92 bewegbar ist. Das dritte Losrad 76 ist also auf der zweiten Zwischenwelle 36 vorgesehen und steht über das dritte Schaltelement 90 mit der zweiten Zwischenwelle 36 in Verbindung. Dadurch kann ein Drehmoment und eine Drehzahl von der zweiten Zwischenwelle 36 über das dritte Losrad 76 und das fünfte Festrad 72 auf die Ausgangswelle 32 übertragen werden, insbesondere wenn das dritte Losrad 76 über das dritte Schaltelement 90 eine drehfeste Verbindung mit der zweiten Zwischenwelle 36 aufweist, also das dritte Schaltelement 90 betätigt ist.

Im Speziellen kann, wie in Figur 2 gezeigt, das landwirtschaftliche Nutzfahrzeug 10 oder das Zapfwellengetriebe 20 eine Kupplung 100 umfassen. Eine Eingangsseiten der Kupplung 100 kann mit einer Abtriebswelle 102 des Antriebsmotors und eine Ausgangsseiten der Kupplung 100 mit einem als Festrad ausgebildeten zweiten Antriebsrad 106 verbunden sein. Ausserdem kann ein als Festrad ausgebildetes erstes Antriebsrad 104 auf der Eingangswelle 30 angeordnet sein. Das erste Antriebsrad 104 ist als Teil des Zapfwellengetriebes 20 ausgebildet und die Kupplung 100 und das zweite Antriebsrad 106 sind als Teil des Nutzfahrzeugs 10 ausgebildet.

Das Zapfwellengetriebe 20 ist vierstufig ausgebildet, weist also vier Übersetzungsstufen auf. Im Folgenden sind die vier Übersetzungsstufen für das erste Ausführungsbeispiel beschrieben. Die erste Übersetzungsstufe kann durch die Betätigung oder Einrücken des dritten Schaltelements 90 hergestellt oder realisiert werden. Dadurch wird das dritte Losrad 76 drehfest mit der zweiten Zwischenwelle 36 verbunden. Dabei kann das dritte Schaltelement 90 derart betätigt werden, dass das dritte Schaltelement 90 in eine erste Position 92 bewegt und das dritte Losrad 76 drehfest mit der zweiten Zwischenwelle 36 verbunden werden kann. Dadurch kann ein Drehmoment und eine Drehzahl von der Eingangswelle 30 über das erste Festrad 42 zum dritten Festrad 46 auf die zweite Zwischenwelle 36 und weiter über das dritte Losrad 76 zum fünften Festrad 72 auf die Ausgangswelle 32 übertragen werden. Der ersten Übersetzungsstufe ist die Übersetzungsstufe 540 zugeordnet. Die erste Übersetzungsstufe liefert folglich bei Nenndrehzahl des Antriebsmotors eine Drehzahl von 540 Umdrehungen pro Minute. Die zweite Übersetzungsstufe kann durch die Betätigung oder Einrücken des zweiten Schaltelements 80 hergestellt oder realisiert werden. Dadurch wird das zweite Losrad 74 drehfest mit der ersten Zwischenwelle 34 verbunden wird. Dabei kann das zweite Schaltelement 80 derart betätigt werden, dass das zweite Schaltelement 80 in eine erste Position 82 bewegt und das zweite Losrad 74 drehfest mit der ersten Zwischenwelle 34 verbunden werden kann. Dadurch kann ein Drehmoment und eine Drehzahl von der Eingangswelle 30 über das erste Festrad 42 zum zweiten Festrad 44 auf die erste Zwischenwelle 34 und weiter über das zweite Losrad 74 zum fünften Festrad 72 auf die Ausgangswelle 32 übertragen werden. Der zweiten Übersetzungsstufe ist die Übersetzungsstufe 540E zugeordnet. Die zweite Übersetzungsstufe liefert folglich bei ökonomischem Motorbetrieb eine Drehzahl von 540 Umdrehungen pro Minute. Die dritte Übersetzungsstufe kann durch die Betätigung oder Einrücken des ersten Schaltelements 50 hergestellt oder realisiert werden. Dadurch wird das erste Losrad 64 drehfest mit der Ausgangswelle 32 verbunden wird. Dabei kann das erste Schaltelement 50 derart betätigt werden, dass das erste Schaltelement 50 in eine zweite Position 54 bewegt und das erste Losrad 64 drehfest mit der Ausgangswelle 32 verbunden werden kann. Dadurch kann ein Drehmoment und eine Drehzahl von der Eingangswelle 30 über das erste Festrad 42 zum zweiten Festrad 44 auf die erste Zwischenwelle 34 und weiter über das vierte Festrad 62 zum ersten Losrad 64 auf die Ausgangswelle 32 übertragen werden. Der dritten Übersetzungsstufe ist die Übersetzungsstufe 1000 zugeordnet. Die dritte Übersetzungsstufe liefert folglich bei Nenndrehzahl des Antriebsmotors eine Drehzahl von 1000 Umdrehungen pro Minute. Die vierte Übersetzungsstufe kann durch die Betätigung oder Einrücken des ersten Schaltelements 50 hergestellt oder realisiert werden. Dadurch wird das erste Festrad 42 und/oder die Eingangswelle 30 drehfest mit der Ausgangswelle 32 verbunden. Dabei kann das erste Schaltelement 50 derart betätigt werden, dass das erste Schaltelement 50 in eine erste Position 52 bewegt und das erste Festrad und/oder die Eingangswelle 30 drehfest mit der Ausgangswelle 32 verbunden werden kann. Dadurch kann ein Drehmoment und eine Drehzahl von der Eingangswelle 30 über das erste Festrad 42 auf die Ausgangswelle 32 übertragen werden. Der vierten Übersetzungsstufe ist die Übersetzungsstufe 1000E zugeordnet. Die vierte Übersetzungsstufe liefert folglich bei ökonomischem Motorbetrieb eine Drehzahl von 1000 Umdrehungen pro Minute.

Figur 3 zeigt eine schematische Darstellung eines zweiten Ausführungsbeispiels des erfindungsgemässen Zapfwellengetriebes 20. Das in Figur 3 gezeigte Zapfwellengetriebe 20 entspricht im Wesentlichen den in den Figuren 1 bis 2 gezeigten Zapfwellengetrieben 20, sodass im Folgenden lediglich auf Details und/oder Unterschiede eingegangen wird. Das Nutzfahrzeug 10 gemäss Figur 1 kann das Zapfwellengetriebe 20, wie in Figur 3 dargestellt, umfassen. Anders als im ersten Ausführungsbeispiel sind die Zahnräder des ersten Zahnradpaars 60 ein erstes Losrad 64 auf der ersten Zwischenwelle 34 und ein viertes Festrad 62 auf der Ausgangswelle 32. Die erste Zwischenwelle 34 weist also das erste Losrad 64 und die Ausgangswelle 32 das vierte Festrad 62 auf. Die erste Zwischenwelle 34 ist mit dem zweiten oder durch das zweite Schaltelement 80, bevorzugt über das erste Zahnradpaar 60, besonders bevorzug über das erste Losrad 64 und das vierte Festrad 62, mit der Ausgangswelle 32 verbindbar. Im Speziellen kann mit dem zweiten Schaltelement 80 das erste Zahnradpaar 60, insbesondere das erste Losrad 64, schaltbar sein. Das erste Losrad 64 ist mit dem zweiten oder durch das zweite Schaltelement 80 mit der ersten Zwischenwelle 34 verbindbar und/oder koppelbar, besonders bevorzugt lösbar drehfest verbindbar und/oder koppelbar. Mit anderen Worten, das Zapfwellengetriebe 20, insbesondere die erste Zwischenwelle 34, kann das zweite Schaltelement 80 zur drehfesten Verbindung des ersten Losrads 64 mit der ersten Zwischenwelle 34 aufweisen. Durch die Betätigung des zweiten Schaltelements 80 kann also das erste Losrad 64 drehfest mit der ersten Zwischenwelle 34 verbunden werden. Dazu kann das zweite Schaltelement 80 derart betätigt werden, dass es, insbesondere axial in eine erste Richtung entlang der ersten Zwischenwelle 34, in eine erste Position 82 bewegbar ist. Dadurch kann ein Drehmoment und eine Drehzahl von der ersten Zwischenwelle 34 über das erste Losrad 64 und das vierte Festrad 62 auf die Ausgangswelle 32 übertragen werden, insbesondere wenn das erste Losrad 64 über das zweite Schaltelement 80 eine drehfeste Verbindung mit der ersten Zwischenwelle 34 aufweist, also das zweite Schaltelement 80 betätigt ist.

Das Zapfwellengetriebe 20 des zweiten Ausführungsbeispiels umfasst weiter die zweite Zahnradstufe 70. Mit dem zweiten Schaltelement 80 kann auch die zweite Zahnradstufe 70, insbesondere das zweite Losrad 74, schaltbar sein. Das zweite Losrad 74 ist mit dem zweiten oder durch das zweite Schaltelement 80 mit der ersten Zwischenwelle 34 verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe 20, insbesondere die erste Zwischenwelle 34, kann das zweite Schaltelement 80 zur drehfesten Verbindung des zweiten Losrads 74 mit der ersten Zwischenwelle 34 aufweisen. Durch die Betätigung des zweiten Schaltelements 80 kann also das zweite Losrad 74 drehfest mit der ersten Zwischenwelle 34 verbunden werden. Dazu kann das zweite Schaltelement 80 derart betätigt werden, dass es, insbesondere axial in eine zweite Richtung, die entgegengesetzt zur ersten Richtung ist, entlang der ersten Zwischenwelle 34, in eine zweite Position 84 bewegbar ist. Das zweite Losrad 74 ist also auf der ersten Zwischenwelle 34 vorgesehen und steht über das zweite Schaltelement 80 mit der ersten Zwischenwelle 34 in Verbindung. Dadurch kann ein Drehmoment und eine Drehzahl von der ersten Zwischenwelle 34 über das zweite Losrad 74 und das fünfte Festrad 72 auf die Ausgangswelle 32 übertragen werden, insbesondere wenn das zweite Losrad 74 über das zweite Schaltelement 80 eine drehfeste Verbindung mit der ersten Zwischenwelle 34 aufweist, also das zweite Schaltelement 80 betätigt ist.

Die vier Übersetzungsstufen des zweiten Ausführungsbeispiels ergeben sich wie folgt. Die erste Übersetzungsstufe kann durch die Betätigung oder Einrücken des dritten Schaltelements 90 hergestellt oder realisiert werden. Dadurch wird das dritte Losrad 76 drehfest mit der zweiten Zwischenwelle 36 verbunden wird. Dabei kann das dritte Schaltelement 90 derart betätigt werden, dass das dritte Schaltelement 90 in eine erste Position 92 bewegt und das dritte Losrad 76 drehfest mit der zweiten Zwischenwelle 36 verbunden werden kann. Dadurch kann ein Drehmoment und eine Drehzahl von der Eingangswelle 30 über das erste Festrad 42 zum dritten Festrad 46 auf die zweite Zwischenwelle 36 und weiter über das dritte Losrad 76 zum fünften Festrad 72 auf die Ausgangswelle 32 übertragen werden. Der ersten Übersetzungsstufe ist die Übersetzungsstufe 540 zugeordnet. Die erste Übersetzungsstufe liefert folglich bei Nenndrehzahl des Antriebsmotors eine Drehzahl von 540 Umdrehungen pro Minute.

Die zweite Übersetzungsstufe kann durch die Betätigung oder Einrücken des zweiten Schaltelements 80 hergestellt oder realisiert werden. Dadurch wird das erste Losrad 64 drehfest mit der ersten Zwischenwelle 34 verbunden wird. Dabei kann das zweite Schaltelement 80 derart betätigt werden, dass das zweite Schaltelement 80 in eine erste Position 82 bewegt und das erste Losrad 64 drehfest mit der ersten Zwischenwelle 34 verbunden werden kann. Dadurch kann ein Drehmoment und eine Drehzahl von der Eingangswelle 30 über das erste Festrad 42 zum zweiten Festrad 44 auf die erste Zwischenwelle 34 und weiter über das erste Losrad 64 zum vierten Festrad 62 auf die Ausgangswelle 32 übertragen werden. Der zweiten Übersetzungsstufe ist die Übersetzungsstufe 540E zugeordnet. Die zweite Übersetzungsstufe liefert folglich bei ökonomischem Motorbetrieb eine Drehzahl von 540 Umdrehungen pro Minute.

Die dritte Übersetzungsstufe kann durch die Betätigung oder Einrücken des zweiten Schaltelements 80 hergestellt oder realisiert werden. Dadurch wird das zweite Losrad 74 drehfest mit der ersten Zwischenwelle 34 verbunden wird. Dabei kann das zweite Schaltelement 80 derart betätigt werden, dass das zweite Schaltelement 80 in die zweite Position 84 bewegt und das zweite Losrad 74 drehfest mit der ersten Zwischenwelle 34 verbunden werden kann. Dadurch kann ein Drehmoment und eine Drehzahl von der Eingangswelle 30 über das erste Festrad 42 zum zweiten Festrad 44 auf die erste Zwischenwelle 34 und weiter über das zweite Losrad 74 zum fünften Festrad 72 auf die Ausgangswelle 32 übertragen werden. Der dritten Übersetzungsstufe ist die Übersetzungsstufe 1000 zugeordnet. Die dritte Übersetzungsstufe liefert folglich bei Nenndrehzahl des Antriebsmotors eine Drehzahl von 1000 Umdrehungen pro Minute.

Die vierte Übersetzungsstufe kann durch die Betätigung oder Einrücken des ersten Schaltelements 50 hergestellt oder realisiert werden. Dadurch wird das erste Festrad 42 und/oder die Eingangswelle 30 drehfest mit der Ausgangswelle 32 verbunden. Dabei kann das erste Schaltelement 50 derart betätigt werden, dass das erste Schaltelement 50 in eine erste Position 52 bewegt und das erste Festrad 42 und/oder die Eingangswelle 30 drehfest mit der Ausgangswelle 32 verbunden werden kann. Dadurch kann ein Drehmoment und eine Drehzahl von der Eingangswelle 30 über das erste Festrad 42 auf die Ausgangswelle 32 übertragen werden. Der vierten Übersetzungsstufe ist die Übersetzungsstufe 1000E zugeordnet. Die vierte Übersetzungsstufe liefert folglich bei ökonomischem Motorbetrieb eine Drehzahl von 1000 Umdrehungen pro Minute.

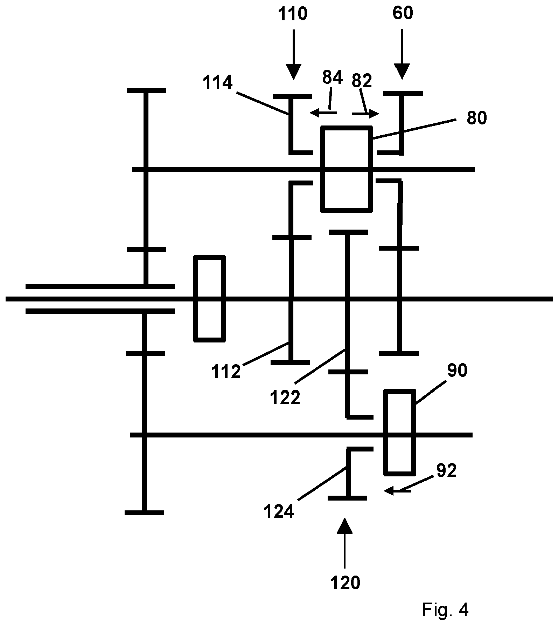

Figur 4 zeigt eine schematische Darstellung eines dritten Ausführungsbeispiels des erfindungsgemässen Zapfwellengetriebes 20. Das in Figur 4 gezeigte Zapfwellengetriebe 20 entspricht im Wesentlichen den in den Figuren 1 bis 3 gezeigten Zapfwellengetrieben 20, sodass im Folgenden lediglich auf Details und/oder Unterschiede eingegangen wird. Das Nutzfahrzeug 10 gemäss Figur 1 kann das Zapfwellengetriebe 20, wie in Figur 4 dargestellt, umfassen. Das Zapfwellengetriebe 20 des dritten Ausführungsbeispiels umfasst das erstes Zahnradpaar 60 gemäss Figur 3, wobei durch die Betätigung des zweiten Schaltelements 80 das erste Losrad 64 drehfest mit der ersten Zwischenwelle 34 verbunden werden kann. Dazu kann das zweite Schaltelement 80 derart betätigt werden, dass es, insbesondere axial in eine erste Richtung entlang der ersten Zwischenwelle 34, in die erste Position 82 bewegbar ist.

Das Zapfwellengetriebe 20 umfasst weiter ein zweites Zahnradpaar 110 mit zwei Zahnrädern. Dabei ist das zweite Zahnradpaar 110 derart angeordnet, dass die erste Zwischenwelle 34 und die Ausgangswelle 32 je ein Zahnrad aufweisen und die Zahnräder des zweiten Zahnradpaars 110, insbesondere zwischen der Ausgangswelle 32 und der ersten Zwischenwelle 34, im Eingriff stehen. Die Zahnräder des zweiten Zahnradpaars 110 sind ein zweites Losrad 114 auf der ersten Zwischenwelle 34 und ein fünftes Festrad 112 auf der Ausgangswelle 32. Die erste Zwischenwelle 34 ist mit dem zweiten oder durch das zweite Schaltelement 80, bevorzugt über das zweite Zahnradpaar 110, besonders bevorzug über das zweite Losrad 114 und das fünfte Festrad 112, mit der Ausgangswelle 32 verbindbar. Im Speziellen kann mit dem zweiten Schaltelement 80 das zweite Zahnradpaar 110, insbesondere das zweite Losrad 114, schaltbar sein. Das zweite Losrad 114 ist mit dem zweiten oder durch das zweite Schaltelement 80 mit der ersten Zwischenwelle 34 verbindbar und/oder koppelbar, besonders bevorzugt lösbar drehfest verbindbar und/oder koppelbar. Mit anderen Worten, das Zapfwellengetriebe 20, insbesondere die erste Zwischenwelle 34, kann das zweite Schaltelement 80 zur drehfesten Verbindung des zweiten Losrads 114 mit der ersten Zwischenwelle 34 aufweisen. Durch die Betätigung des zweiten Schaltelements 80 kann also das zweite Losrad 114 drehfest mit der ersten Zwischenwelle 34 verbunden werden. Dazu kann das zweite Schaltelement 80 derart betätigt werden, dass es, insbesondere axial in zur ersten Richtung entgegengesetzten zweiten Richtung entlang der ersten Zwischenwelle 34, in eine zweite Position 84 bewegbar ist. Das zweite Losrad 114 ist also auf der ersten Zwischenwelle 34 vorgesehen und steht über das zweite Schaltelement 80 mit der ersten Zwischenwelle 34 in Verbindung. Dadurch kann ein Drehmoment und eine Drehzahl von der ersten Zwischenwelle 34 über das zweite Losrad 114 und das fünfte Festrad 112 auf die Ausgangswelle 32 übertragen werden, insbesondere wenn das zweite Losrad 114 über das zweite Schaltelement 80 eine drehfeste Verbindung mit der ersten Zwischenwelle 34 aufweist, also das zweite Schaltelement 80 betätigt ist.

Das Zapfwellengetriebe 20 umfasst ausserdem ein drittes Zahnradpaar 120 mit zwei Zahnrädern. Dabei ist das dritte Zahnradpaar 120 derart angeordnet, dass die zweite Zwischenwelle 36 und die Ausgangswelle 32 je ein Zahnrad aufweisen und die Zahnräder des dritten Zahnradpaars 120, insbesondere zwischen der Ausgangswelle 32 und der zweiten Zwischenwelle 36, im Eingriff stehen. Die Zahnräder des dritten Zahnradpaars 120 sind ein drittes Losrad 124 auf der zweiten Zwischenwelle 36 und ein sechstes Festrad 122 auf der Ausgangswelle 32. Das Zapfwellengetriebe, insbesondere die zweite Zwischenwelle 36, weist das dritte Schaltelement 90 auf. Die zweite Zwischenwelle 36 ist mit dem dritten oder durch das dritte Schaltelement 90, bevorzugt über das dritte Zahnradpaar 120, besonders bevorzug über das dritte Losrad 124 und das sechste Festrad 122, mit der Ausgangswelle 32 verbindbar. Ausserdem kann mit dem dritten Schaltelement 90 das dritte Zahnradpaar 120, insbesondere das dritte Losrad 124, schaltbar sein. Das dritte Losrad 124 ist mit dem dritten oder durch das dritte Schaltelement 90 mit der zweiten Zwischenwelle 36 verbindbar und/oder koppelbar, bevorzugt drehfest verbindbar und/oder koppelbar, besonders bevorzugt lösbar drehfest verbindbar und/oder koppelbar. Mit anderen Worten, das Zapfwellengetriebe 20, insbesondere die zweite Zwischenwelle 36, kann das dritte Schaltelement 90 zur drehfesten Verbindung des dritten Losrads 124 mit der zweiten Zwischenwelle 36 aufweisen. Durch die Betätigung des dritten Schaltelements 90 kann also das dritte Losrad 124 drehfest mit der zweiten Zwischenwelle 36 verbunden werden. Dazu kann das dritte Schaltelement 90 derart betätigt werden, dass es, insbesondere axial in eine erste Richtung entlang der zweiten Zwischenwelle 36, in eine erste Position 92 bewegbar ist. Dadurch kann ein Drehmoment und eine Drehzahl von der zweiten Zwischenwelle 36 über das dritte Losrad 124 und das sechste Festrad 122 auf die Ausgangswelle 32 übertragen werden, insbesondere wenn das dritte Losrad 124 über das dritte Schaltelement 90 eine drehfeste Verbindung mit der zweiten Zwischenwelle 36 aufweist, also das dritte Schaltelement 90 betätigt ist.

Die vier Übersetzungsstufen des dritten Ausführungsbeispiels ergeben sich wie folgt. Die erste Übersetzungsstufe kann durch die Betätigung oder Einrücken des dritten Schaltelements 90 hergestellt oder realisiert werden. Dadurch wird das dritte Losrad 124 drehfest mit der zweiten Zwischenwelle 36 verbunden wird. Dadurch kann ein Drehmoment und eine Drehzahl von der Eingangswelle 30 über das erste Festrad 42 zum dritten Festrad 46 auf die zweite Zwischenwelle 36 und weiter über das dritte Losrad 124 zum sechsten Festrad 122 auf die Ausgangswelle 32 übertragen werden. Der ersten Übersetzungsstufe ist die Übersetzungsstufe 540 zugeordnet. Die erste Übersetzungsstufe liefert folglich bei Nenndrehzahl des Antriebsmotors eine Drehzahl von 540 Umdrehungen pro Minute.

Die zweite Übersetzungsstufe kann durch die Betätigung oder Einrücken des zweiten Schaltelements 80 hergestellt oder realisiert werden. Dadurch wird das erste Losrad 64 drehfest mit der ersten Zwischenwelle 34 verbunden wird. Dabei kann das zweite Schaltelement 80 derart betätigt werden, dass das zweite Schaltelement 80 in die erste Position 82 bewegt und das erste Losrad 64 drehfest mit der ersten Zwischenwelle 34 verbunden werden kann. Dadurch kann ein Drehmoment und eine Drehzahl von der Eingangswelle 30 über das erste Festrad 42 zum zweiten Festrad 44 auf die erste Zwischenwelle 34 und weiter über das erste Losrad 64 zum vierten Festrad 62 auf die Ausgangswelle 32 übertragen werden. Der zweiten Übersetzungsstufe ist die Übersetzungsstufe 540E zugeordnet. Die zweite Übersetzungsstufe liefert folglich bei ökonomischem Motorbetrieb eine Drehzahl von 540 Umdrehungen pro Minute.

Die dritte Übersetzungsstufe kann durch die Betätigung oder Einrücken des zweiten Schaltelements 80 hergestellt oder realisiert werden. Dadurch wird das zweite Losrad 114 drehfest mit der ersten Zwischenwelle 34 verbunden wird. Dabei kann das zweite Schaltelement 80 derart betätigt werden, dass das zweite Schaltelement 80 in die zweite Position 84 bewegt und das zweite Losrad 114 drehfest mit der ersten Zwischenwelle 34 verbunden werden kann. Dadurch kann ein Drehmoment und eine Drehzahl von der Eingangswelle 30 über das erste Festrad 42 zum zweiten Festrad 44 auf die erste Zwischenwelle 34 und weiter über das zweite Losrad 114 zum fünften Festrad 112 auf die Ausgangswelle 32 übertragen werden. Der dritten Übersetzungsstufe ist die Übersetzungsstufe 1000 zugeordnet. Die dritte Übersetzungsstufe liefert folglich bei Nenndrehzahl des Antriebsmotors eine Drehzahl von 1000 Umdrehungen pro Minute.

Die vierte Übersetzungsstufe kann durch die Betätigung oder Einrücken des ersten Schaltelements 50 hergestellt oder realisiert werden. Dadurch wird das erste Festrad 42 und/oder die Eingangswelle 30 drehfest mit der Ausgangswelle 32 verbunden. Dabei kann das erste Schaltelement 50 derart betätigt werden, dass das erste Schaltelement 50 in eine erste Position 52 bewegt und das erste Festrad 42 und/oder die Eingangswelle 30 drehfest mit der Ausgangswelle 32 verbunden werden kann. Dadurch kann ein Drehmoment und eine Drehzahl von der Eingangswelle 30 über das erste Festrad 42 auf die Ausgangswelle 32 übertragen werden. Der vierten Übersetzungsstufe ist die Übersetzungsstufe 1000E zugeordnet. Die vierte Übersetzungsstufe liefert folglich bei ökonomischem Motorbetrieb eine Drehzahl von 1000 Umdrehungen pro Minute.

Die oben genannten sowie die im Folgenden genannten Vorteile gelten für alle gezeigten Figuren. Von Vorteil wird mit dem erfindungsgemässen Zapfwellengetriebe 20 eine einfache konstruktive Ausbildung des Zapfwellengetriebes 20 und des Nutzfahrzeugs 10 sowie vorteilhafterweise eine kompakte Bauweise mit minimalem Bauraum erreicht. Darüber hinaus können die Materialkosten für das Getriebe 20 aufgrund der optimierten Bauweise reduziert werden.

## Patentansprüche

1. Zapfwellengetriebe für ein landwirtschaftliches Nutzfahrzeug (10), umfassend:
eine Eingangswelle (30),
eine Ausgangswelle (32),
eine erste Zwischenwelle (34),
eine zweite Zwischenwelle (36),
eine erste Zahnradstufe (40), die derart angeordnet ist, dass die Eingangswelle (30) ein erstes Festrad (42) und die erste Zwischenwelle (34) ein zweites Festrad (44) und die zweite Zwischenwelle (36) ein drittes Festrad (46) aufweisen, wobei nur das erste Festrad (42) mit dem zweiten Festrad (44) und das erste Festrad (42) mit dem dritten Festrad (46) in Eingriff stehen, **dadurch gekennzeichnet, dass** die Eingangswelle (30) als Hohlwelle ausgebildet ist, und die Ausgangswelle (32) zumindest teilweise in der Eingangswelle (30) angeordnet ist.

2. Zapfwellengetriebe nach Anspruch 1, **dadurch gekennzeichnet, dass** das Zapfwellengetriebe (20) ein erstes Schaltelement (50) aufweist, und mit dem ersten Schaltelement (50) das erste Festrad (42) mit der Ausgangswelle (32) verbindbar ist.

3. Zapfwellengetriebe nach Anspruch 1 oder 2, **dadurch gekennzeichnet, dass** das Zapfwellengetriebe (20) ein zweites Schaltelement (80) aufweist, und mit dem zweiten Schaltelement (80) die erste Zwischenwelle (34) mit der Ausgangswelle (32) verbindbar ist.

4. Zapfwellengetriebe mindestens einem der vorangehenden Ansprüche, **dadurch gekennzeichnet, dass** das Zapfwellengetriebe (20) ein drittes Schaltelement (90) aufweist, und mit dem dritten Schaltelement (90) die zweite Zwischenwelle (36) mit der Ausgangswelle (32) verbindbar ist.

5. Zapfwellengetriebe mindestens einem der vorangehenden Ansprüche, **dadurch gekennzeichnet, dass** das Zapfwellengetriebe ein erstes Zahnradpaar (60) mit zwei Zahnrädern umfasst, und/oder das erste Zahnradpaar (60) derart angeordnet ist, dass die erste Zwischenwelle (34) und die Ausgangswelle (32) je ein Zahnrad aufweisen und die Zahnräder des ersten Zahnradpaars (60) im Eingriff stehen.

6. Zapfwellengetriebe nach Anspruch 5, **dadurch gekennzeichnet, dass** das erste Zahnradpaar (60) ein erstes Losrad (64) auf der ersten Zwischenwelle (34) und ein viertes Festrad (62) auf der Ausgangswelle (32) umfasst.

7. Zapfwellengetriebe nach Anspruch 5, **dadurch gekennzeichnet, dass** das erste Zahnradpaar (60) ein viertes Festrad (62) auf der ersten Zwischenwelle (34) und ein erstes Losrad (64) auf der Ausgangswelle (32) umfasst.

8. Zapfwellengetriebe nach Anspruch 7, **dadurch gekennzeichnet, dass** mit dem ersten Schaltelement (50) die Ausgangswelle (32) mit der ersten Zwischenwelle (34) verbindbar ist.

9. Zapfwellengetriebe nach mindestens einem der vorangehenden Ansprüche, **dadurch gekennzeichnet, dass** das Zapfwellengetriebe eine zweite Zahnradstufe (70) umfasst, die derart angeordnet ist, dass die Ausgangswelle (32) ein fünftes Festrad (72) und die erste Zwischenwelle (34) ein zweites Losrad (74) und die zweite Zwischenwelle (36) ein drittes Losrad (76) aufweisen, wobei nur das fünfte Festrad (72) mit dem zweiten Losrad (74) und das fünfte Festrad (72) mit dem dritten Losrad (76) in Eingriff stehen.

10. Zapfwellengetriebe nach mindestens einem der Ansprüche 1 bis 6, **dadurch gekennzeichnet, dass** das Zapfwellengetriebe (20) ein zweites Zahnradpaar (110) mit zwei Zahnrädern umfasst und/oder das zweite Zahnradpaar (110) derart angeordnet ist, dass die erste Zwischenwelle (34) und die Ausgangswelle (32) je ein Zahnrad aufweisen und die Zahnräder des zweiten Zahnradpaares (110) im Eingriff stehen.

11. Zapfwellengetriebe nach Anspruch 10, **dadurch gekennzeichnet, dass** das zweite Zahnradpaar (110) ein zweites Losrad (114) auf der ersten Zwischenwelle (34) und ein fünftes Festrad (112) auf der Ausgangswelle (32) umfasst.

12. Zapfwellengetriebe nach mindestens einem der Ansprüche 10 bis 11, **dadurch gekennzeichnet, dass** das Zapfwellengetriebe (20) ein drittes Zahnradpaar (120) mit zwei Zahnrädern umfasst und/oder das dritte Zahnradpaar (120) derart angeordnet ist, dass die zweite Zwischenwelle (36) und die Ausgangswelle (32) je ein Zahnrad aufweisen und die Zahnräder des dritten Zahnradpaars (120) in Eingriff stehen.

13. Zapfwellengetriebe nach Anspruch 12, **dadurch gekennzeichnet, dass** das dritte Zahnradpaar (120) ein drittes Losrad (124) auf der zweiten Zwischenwelle (36) und ein sechstes Festrad (122) auf der Ausgangswelle (32) umfasst.

14. Landwirtschaftliches Nutzfahrzeug umfassend ein Zapfwellengetriebe nach einem der Ansprüche 1 bis 13.

15. Landwirtschaftliches Nutzfahrzeug nach Anspruch 14, **dadurch gekennzeichnet, dass** das landwirtschaftliche Nutzfahrzeug einen Antriebsmotor umfasst, wobei eine Antriebswelle des Zapfwellengetriebes eine Abtriebswelle des Antriebsmotors ist oder mit dieser gekoppelt ist.

## Claims

1. PTO shaft transmission for an agricultural utility vehicle (10), comprising:
an input shaft (30),
an output shaft (32),
a first intermediate shaft (34),
a second intermediate shaft (36),
a first gearwheel stage (40), which is arranged in such a way that the input shaft (30) has a first fixed gear (42) and the first intermediate shaft (34) has a second fixed gear (44) and the second intermediate shaft (36) has a third fixed gear (46), wherein only the first fixed gear (42) is in engagement with the second fixed gear (44) and the first fixed gear (42) is in engagement with the third fixed gear (46), **characterized in that** the input shaft (30) is designed as a hollow shaft, and the output shaft (32) is at least partially arranged in the input shaft (30).

2. PTO shaft transmission according to Claim 1, **characterized in that** the PTO shaft transmission (20) has a first shifting element (50), and the first fixed gear (42) is connectable by the first shifting element (50) to the output shaft (32).

3. PTO shaft transmission according to Claim 1 or 2, **characterized in that** the PTO shaft transmission (20) has a second shifting element (80), and the first intermediate shaft (34) is connectable by the second shifting element (80) to the output shaft (32).

4. PTO shaft transmission according to at least one of the preceding claims, **characterized in that** the PTO shaft transmission (20) has a third shifting element (90), and the second intermediate shaft (36) is connectable by the third shifting element (90) to the output shaft (32).

5. PTO shaft transmission according to at least one of the preceding claims, **characterized in that** the PTO shaft transmission comprises a first gearwheel pair (60) with two gearwheels, and/or the first gearwheel pair (60) is arranged in such a way that the first intermediate shaft (34) and the output shaft (32) each have a gearwheel and the gearwheels of the first gearwheel pair (60) are in engagement.

6. PTO shaft transmission according to Claim 5, **characterized in that** the first gearwheel pair (60) comprises a first idler gear (64) on the first intermediate shaft (34) and a fourth fixed gear (62) on the output shaft (32).

7. PTO shaft transmission according to Claim 5, **characterized in that** the first gearwheel pair (60) comprises a fourth fixed gear (62) on the first intermediate shaft (34) and a first idler gear (64) on the output shaft (32).

8. PTO shaft transmission according to Claim 7, **characterized in that** the output shaft (32) is connectable by the first shifting element (50) to the first intermediate shaft (34).

9. PTO shaft transmission according to at least one of the preceding claims, **characterized in that** the PTO shaft transmission comprises a second gearwheel stage (70), which is arranged in such a way that the output shaft (32) has a fifth fixed gear (72) and the first intermediate shaft (34) has a second idler gear (74) and the second intermediate shaft (36) has a third idler gear (76), wherein only the fifth fixed gear (72) is in engagement with the second idler gear (74) and the fifth fixed gear (72) is in engagement with the third idler gear (76).

10. PTO shaft transmission according to at least one of Claims 1 to 6, **characterized in that** the PTO shaft transmission (20) comprises a second gearwheel pair (110) with two gearwheels and/or the second gearwheel pair (110) is arranged in such a way that the first intermediate shaft (34) and the output shaft (32) each have a gearwheel and the gearwheels of the second gearwheel pair (110) are in engagement.

11. PTO shaft transmission according to Claim 10, **characterized in that** the second gearwheel pair (110) comprises a second idler gear (114) on the first intermediate shaft (34) and a fifth fixed gear (112) on the output shaft (32).

12. PTO shaft transmission according to at least one of Claims 10 to 11, **characterized in that** the PTO shaft transmission (20) comprises a third gearwheel pair (120) with two gearwheels and/or the third gearwheel pair (120) is arranged in such a way that the second intermediate shaft (36) and the output shaft (32) each have one gearwheel and the gearwheels of the third gearwheel pair (120) are in engagement.

13. PTO shaft transmission according to Claim 12, **characterized in that** the third gearwheel pair (120) comprises a third idler gear (124) on the second intermediate shaft (36) and a sixth fixed gear (122) on the output shaft (32).

14. Agricultural utility vehicle, comprising a PTO shaft transmission according to one of Claims 1 to 13.

15. Agricultural utility vehicle according to Claim 14, **characterized in that** the agricultural utility vehicle comprises a drive motor, wherein a drive shaft of the PTO shaft transmission is a driven shaft of the drive motor or is coupled to said driven shaft.

## Revendications

1. Transmission par arbre de prise de force pour un véhicule utilitaire agricole (10), comprenant :
un arbre d'entrée (30),
un arbre de sortie (32),
un premier arbre intermédiaire (34),
un deuxième arbre intermédiaire (36),
un premier étage d'engrenages (40) agencé de telle sorte que l'arbre d'entrée (30) présente une première roue fixe (42) et le premier arbre intermédiaire (34) une deuxième roue fixe (44), et le deuxième arbre intermédiaire (36) une troisième roue fixe (46), la première roue fixe (42) étant seule en prise avec la deuxième roue fixe (44) et
la première roue fixe (42) avec la troisième roue fixe (46), **caractérisée en ce que** l'arbre d'entrée (30) est réalisé sous forme d'arbre creux, et l'arbre de sortie (32) est agencé au moins partiellement dans l'arbre d'entrée (30).

2. Transmission par arbre de prise de force selon la revendication 1, **caractérisée en ce que** la transmission par arbre de prise de force (20) présente un premier élément de commutation (50) et **en ce que** la première roue fixe (42) est apte à être reliée à l'arbre de sortie (32) au moyen du premier élément de commutation (50).

3. Transmission par arbre de prise de force selon la revendication 1 ou la revendication 2, **caractérisée en ce que** la transmission par arbre de prise de force (20) présente un deuxième élément de commutation (80), et **en ce que** le premier arbre intermédiaire (34) est apte à être relié à l'arbre de sortie (32) au moyen du deuxième élément de commutation (80).

4. Transmission par arbre de prise de force selon au moins l'une des revendications précédentes, **caractérisée en ce que** la transmission par arbre de prise de force (20) présente un troisième élément de commutation (90), et le deuxième arbre intermédiaire (36) est apte à être relié à l'arbre de sortie (32) au moyen du troisième élément de commutation (90).

5. Transmission par arbre de prise de force au moins selon l'une des revendications précédentes, **caractérisée en ce que** la transmission par arbre de prise de force comprend une première paire de roues dentées (60) avec deux roues dentées, et/ou la première paire de roues dentées (60) est agencée de telle sorte que le premier arbre intermédiaire (34) et l'arbre de sortie (32) présentent chacun une roue dentée et que les roues dentées de la première paire de roues dentées (60) sont en prise.

6. Transmission par arbre de prise de force selon la revendication 5, **caractérisée en ce que** la première paire de roues dentées (60) comprend une première roue dentée folle (64) sur le premier arbre intermédiaire (34) et une quatrième roue dentée fixe (62) sur l'arbre de sortie (32) .

7. Transmission par arbre de prise de force selon la revendication 5, **caractérisée en ce que** la première paire de roues dentées (60) comprend une quatrième roue dentée fixe (62) sur le premier arbre intermédiaire (34) et une première roue dentée folle (64) sur l'arbre de sortie (32) .

8. Transmission par arbre de prise de force selon la revendication 7, **caractérisée en ce que** l'arbre de sortie (32) est apte à être relié au premier arbre intermédiaire (34) au moyen du premier élément de commutation (50).

9. Transmission par arbre de prise de force selon au moins l'une des revendications précédentes, **caractérisée en ce que** la transmission par arbre de prise de force comprend un deuxième étage de roues dentées (70) agencé de telle sorte que l'arbre de sortie (32) comporte une cinquième roue dentée fixe (72) et le premier arbre intermédiaire (34) comporte une deuxième roue dentée folle (74) et le deuxième arbre intermédiaire (36) comporte une troisième roue dentée folle (76), la cinquième roue dentée fixe (72) étant seule en prise avec la deuxième roue dentée folle (74) et la cinquième roue dentée fixe (72) au moyen de la troisième roue dentée folle (76).

10. Transmission par arbre de prise de force selon au moins l'une des revendications 1 à 6, **caractérisée en ce que** la transmission par arbre de prise de force (20) comprend une deuxième paire de roues dentées (110) avec deux roues dentées et/ou la deuxième paire de roues dentées (110) est agencée de telle sorte que le premier arbre intermédiaire (34) et l'arbre de sortie (32) présentent chacun une roue dentée et que les roues dentées de la deuxième paire de roues dentées (110) sont en prise.

11. Transmission par arbre de prise de force selon la revendication 10, **caractérisée en ce que** la deuxième paire de roues dentées (110) comprend une deuxième roue dentée folle (114) sur le premier arbre intermédiaire (34) et une cinquième roue dentée fixe (112) sur l'arbre de sortie (32).

12. Transmission par arbre de prise de force selon au moins l'une des revendications 10 à 11, **caractérisée en ce que** la transmission par arbre de prise de force (20) comprend une troisième paire de roues dentées (120) comportant deux roues dentées et/ou **en ce que** la troisième paire de roues dentées (120) est agencée de telle sorte que le deuxième arbre intermédiaire (36) et l'arbre de sortie (32) comportent chacun une roue dentée et que les roues dentées de la troisième paire de roues dentées (120) sont en prise.

13. Transmission par arbre de prise de force selon la revendication 12, **caractérisée en ce que** la troisième paire de roues dentées (120) comprend une troisième roue dentée folle (124) sur le deuxième arbre intermédiaire (36) et une sixième roue dentée fixe (122) sur l'arbre de sortie (32).

14. Véhicule utilitaire agricole comprenant une transmission par arbre de prise de force selon l'une des revendications 1 à 13.

15. Véhicule utilitaire agricole selon la revendication 14, **caractérisé en ce que** le véhicule utilitaire agricole comprend un moteur d'entraînement, un arbre d'entrée de la transmission par arbre de prise de force étant un arbre de sortie du moteur d'entraînement ou étant relié à celui-ci.
